# EUROPEAN PATENT APPLICATION

(11) **EP 2 685 249 A1**
(43) Date of publication of application: **15.01.2014**
(21) Application number: 12176214.0
(22) Date of filing: 12.07.2012
(51) Int. Cl.: G01N 25/20, G01K 17/00, G01M 99/00

(54) **Method and device for detecting abnormal heat emission in an industrial process**

(71) Applicant: ABB Research Ltd., 8050 Zürich (CH)
(72) Inventor: Brönmark, Jonas, 722 27 Västerås (SE); Olausson, Martin, 724 82 Västerås (SE); Vartiainen, Elina, 722 18 Västerås (SE)
(74) Representative: Savela, Reino Aleksi

(57) **Abstract**

The present disclosure relates to a method of detecting abnormal heat emission of an industrial process component in an industrial process to facilitate troubleshooting of the industrial process component. The method obtaining (So) a current thermal image of the industrial process component; obtaining (S₃) a reference thermal image of the industrial process component, the reference thermal image depicting the industrial process component in a normal condition; comparing (S₄) the current thermal image with the reference thermal image; and determining (S₅) that the industrial process component emits an abnormal amount of heat if a difference between the reference thermal image and the current thermal image is detected in the step of comparing (S₄) the current thermal image with the reference thermal image. A device carrying out the method is also presented herein.

## Description

### TECHNICAL FIELD

The present disclosure relates to the detection of abnormal conditions in an industrial process component of an industrial process.

### BACKGROUND

Industrial processes within industries such as oil and gas, pulp and paper, metals and mining, power generation, and petrochemical refineries utilise industrial process components, i.e. process equipment, for allowing the steps of the industrial process to be carried out. Such process equipment may for example be tanks, valves, motors or controllers.

Process equipment is typically provided with one or more sensors measuring processes variables such that the industrial process may properly be monitored by a monitoring and/or control system. Abnormal situations in the industrial process resulting from unacceptable deviations of process variable values may thereby be detected. In some situations when an abnormal situation has occurred in the industrial process, a maintenance engineer may be sent to perform troubleshooting of one or more process components. If for example the troubleshooting involves determining whether a process component has a bad electrical connection or if a fuse is not properly attached, the maintenance engineer may have to spend a significant amount of time inspecting the process component before he or she is able to identify the problem.

### SUMMARY

User studies have shown that plant maintenance engineers in some cases use heat cameras to identify issues relating to abnormal heat emission in an industrial process. These issues are typically, but not restricted to, electrical problems such as a badly connected cable, or an unattached fuse.

If a fuse is not correctly inserted or if a cable has a bad contact, the problem can be identified in an image taken with a thermographic camera. After a thermographic camera has output a photo, it is up to the plant maintenance engineer to extract any abnormalities from the image. The maintenance engineers therefore need special education to use the thermographic camera, resulting in expensive training courses and equipment that not every maintenance engineer is able to use.

In view of the above, it would be desirable to be able to provide a method and device that allows a maintenance engineer to identify a heat-emission related problem in an industrial process efficiently.

Hence, according to a first aspect of the present disclosure there is provided a method of detecting abnormal heat emission of an industrial process component in an industrial process, wherein the method comprises: obtaining a current thermal image of the industrial process component; obtaining a reference thermal image of the industrial process component, the reference thermal image depicting the industrial process component in a normal condition; comparing the current thermal image with the reference thermal image; and determining that the industrial process component emits an abnormal amount of heat if a difference between the reference thermal image and the current thermal image is detected in the step of comparing the current thermal image with the reference thermal image.

Thereby, troubleshooting of electrical errors and other industrial process component errors involving abnormal heat emission may be improved. Abnormal heat emission may relate both to higher or lower heat emission than when the industrial process component is in a normal state. As a result, productivity of the industrial process may be increased substantially as errors are found and fixed much faster than in the prior art.

By means of this disclosure, the usage of thermographic cameras, i.e. heat detecting cameras, for troubleshooting no longer requires the personnel to attend courses. Every maintenance engineer will be able to use this tool for diagnostics. This will reduce costs for training while increasing the availability of thermographic camera images for troubleshooting.

One embodiment comprises, if a difference is determined between the reference thermal image and the current thermal image, providing a visual indication in the current thermal image that the industrial process component emits an abnormal amount of heat.

According to one embodiment the visual indication is provided in an area of the industrial process component emitting the abnormal amount of heat.

One embodiment comprises identifying the industrial process component depicted in the current thermal image, and identifying the reference thermal image of the industrial process component from a plurality of reference thermal images, each depicting a respective industrial process component, based on the identity of the industrial process component depicted in the current thermal image.

According to a second aspect of the present disclosure, a computer program comprising computer-executable components for causing a device to perform the steps of the first aspect of this disclosure when the computer-executable components are run on a processor included in the device.

According to a third aspect of the present disclosure there is provided a computer program product comprising a computer readable medium having the computer program of the second aspect embodied therein.

According to a fourth aspect of the present disclosure there is provided a device for detecting a abnormal heat emission of an industrial process component in an industrial process, wherein the device comprises: a processor arranged to: obtain a current thermal image of the industrial process component; obtain a reference thermal image of the industrial process component, the reference thermal image depicting the industrial process component in a normal condition; compare the current thermal image with the reference thermal image; and determine that the industrial process component emits an abnormal amount of heat if a difference between the reference thermal image and the current thermal image is detected when the current thermal image is compared with the reference thermal image.

According to one embodiment the processor is arranged to provide a visual indication in the current thermal image that the industrial process component emits an abnormal amount of heat if a difference is determined between the reference thermal image and the current thermal image.

According to one embodiment the visual indication is provided in an area of the industrial process component emitting the abnormal amount of heat.

According to one embodiment the processor is arranged to identify the industrial process component depicted in the current thermal image, and to identify the reference thermal image of the industrial process component from a plurality of reference thermal images, each depicting a respective industrial process component, based on the identity of the industrial process component depicted in the current thermal image.

According to one embodiment the device is a server.

According to one embodiment the device comprises a memory arranged to store the reference thermal image, and wherein the processor is arranged to communicate with a mobile device for obtaining the current thermal image.

According to one embodiment the device is a mobile device.

One embodiment comprises a thermographic camera arranged to capture the reference thermal image and the current thermal image.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, any step in a method need not necessarily have to be carried out in the presented order, unless explicitly stated otherwise.

### BRIEF DESCRIPTION OF THE DRAWINGS

The specific embodiments of the inventive concept will now be described, by way of example, with reference to the accompanying drawings, in which:
Fig. 1 shows a system for detecting abnormal heat emission from an industrial process component;
Fig. 2 is a flow chart of a method of detecting abnormal heat emission from an industrial process component; and
Figs 3a-b show examples of thermal images of a portion of an industrial process component.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

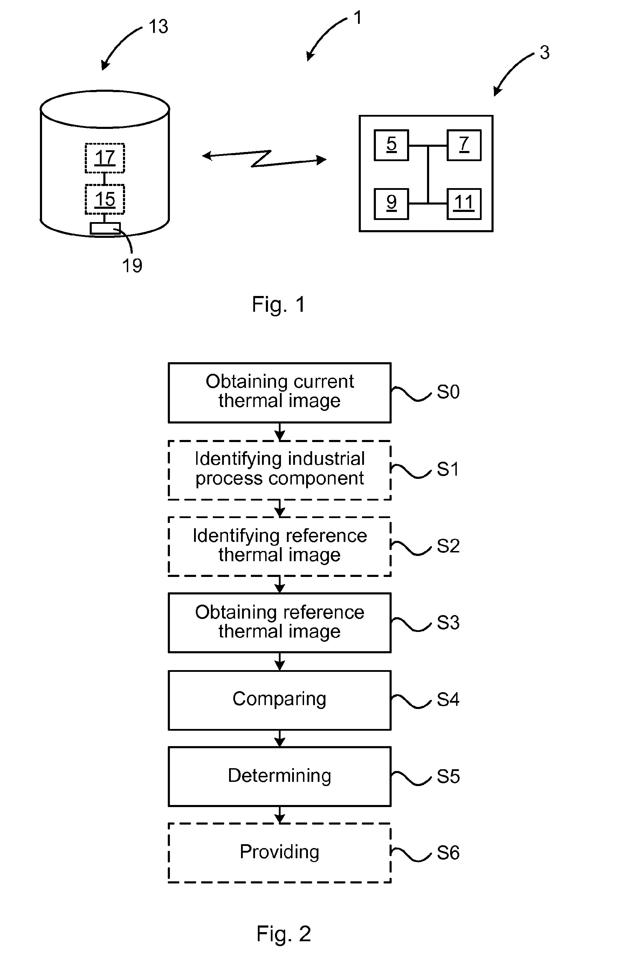

Fig. 1 depicts a system 1 for detecting abnormal heat emission of an industrial process component in an industrial process. An industrial process is to be understood to mean a procedure that involves chemical, electrical or mechanical steps to aid in manufacturing, production, power generation, fabrication, or refining. Examples of such industrial processes are processes relating to the refining of oil and gas, the petrochemical industry, power generation, power transmission, power distribution, metals and mining, chemical industry, pulp and paper, or automation in e.g. the manufacturing industry or food industry. It is to be noted that the present inventive concept can be utilised in many different types of industrial processes, with only a few examples having been given above.

An industrial process component may for example be a tank, a valve, a turbine, a roller or a cluster or rollers for a pulp and paper mill, drying equipment, a refiner, a generator, a motor, a transformer or a boiler or a part or parts thereof.

Abnormal heat emission may for example be caused by an electric abnormality associated with an industrial process component or other heat-emissive abnormality, e.g. a gas leakage from an industrial process component, a motor with bad bearings generating abnormal amounts of heat or improperly insulated machinery such as motors.

The system 1 comprises a mobile device 3 and a server 13. The mobile device 3 comprises a processor 5, a memory 7, i.e. a computer readable medium, an antenna 9, and a thermographic camera 11. The thermographic camera 11 may either be integrated in the mobile device, or it may be an external component that is attachable to the mobile device. The mobile device 1 can for example be a smart phone, a tablet computer, or a portable device especially manufactured for detecting abnormal heat emission of an industrial process component. In embodiments in which the mobile device is a smart phone, a tablet computer or a similar commercially available device, the portion of the method presented herein and executed by the mobile device may advantageously be implemented as a downloadable application.

The server 13 comprises a processor 15, a memory 17, i.e. a computer readable medium, and an antenna 19. The mobile device 3 and the server 13 can by means of their respective antenna 11 and 19 communicate with each other wirelessly over a wireless communication network.

The server may form part of, or be connected to an industrial control system such as a Distributed Control System (DCS), a Supervisory Control And Data Acquisition system (SCADA) or a combination of a SCADA system and DCS system. To that end, the server and the industrial control system are arranged to communicate with each other. An example of a suitable industrial control system is the ABB® 800xA control system.

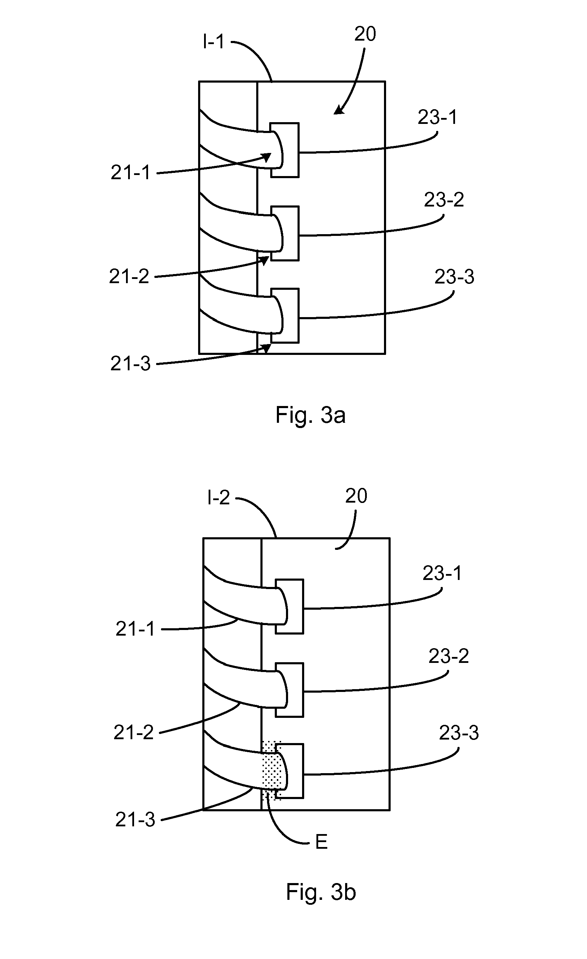

With reference to Figs 2 and 3a-b, the operation of the server 13 and the mobile device 3 will now be described in more detail.

In a typical scenario, the industrial control system indicates, for example on a display device of the industrial control system or on a display device of the mobile device, that a reference thermal image of an industrial process component for which no reference thermal image has previously been stored is to be captured by means of the mobile device 3 when the industrial process component functions properly, i.e. when the industrial process component is in a normal condition. Thereby, a complete library of reference thermal images of all of the industrial process components of an industrial process may successively be captured and collected. The reference thermal images may be stored in a memory, such as memory 5 of the mobile device 3 and/or the memory 17 of the server 13. In order to be able to search the database of reference thermal images, the industrial process component depicted in each reference thermal image is identified, wherein the identity of the industrial process component is associated with the reference thermal image. This identification may either be manual, carried out e.g. by a maintenance engineer, or alternatively it may be automatic. In the latter case, each industrial process component may for example be provided with a unique Radio-Frequency Identification (RFID) tag or a two-dimensional matrix barcode. Hence, when a reference thermal image is captured, the reference thermal image may automatically be associated with the correct industrial process component by means of the RFID tag or matrix barcode.

An example of a reference thermal image I-1 is shown in Fig. 3a, depicting a portion 20 of an industrial process component comprising three cables 21-1, 21-2, and 21-3 connected to a respective connector 23-1, 23-2 and 23-3. In reference thermal image I-1 each cable 21-1, 21-2, and 21-3 is properly connected to its respective connector 23-1, 23-2 and 23-3. Hence, reference thermal image I-1 is suitable for future reference, for comparison at a later instance in time with a current thermal image I-2 of Fig. 3b, in case it is suspected that the portion 20 of the industrial process component emits an abnormal amount of heat.

If an abnormal condition occurs in the industrial process, the industrial control system may provide an indication that an abnormal condition is present, e.g. by displaying process variable values that deviate from an accepted range of values, thus alerting a process operator. The process operator may in response to detecting the abnormal condition send a maintenance engineer to an area of the plant or industrial process system subjected to the abnormal condition to investigate the reason of the abnormal condition. In case it is suspected that the cause of the abnormal condition is due to abnormal heat emission from an industrial process component, the maintenance engineer may carry with him, or her, the mobile device 3.

When the maintenance engineer arrives to the industrial process component that is suspected to be subject to an abnormal heat emissive condition, a current thermal image of the industrial process component is captured by means of the thermographic camera 11 of the mobile device 3.

Hence in a step So, a current thermal image I-2 of an industrial process component is obtained. It should be noted that depending on the implementation of the method, step So of obtaining the current thermal image may be carried out in either of the server 13 and the mobile device 3. For example, according to one variation all of the steps described herein may be carried out in the mobile device 3, e.g. by obtaining the reference thermal image from the server 13, wherein the steps disclosed herebelow are carried out by the processor 5 of the mobile device 3. Alternatively, the current thermal image of the industrial process component may be sent to, and thus obtained by the server 13 from the mobile device 3 after the current thermal image I-2 has been captured by the thermographic camera 11. The steps disclosed herebelow may then be carried out by the processor 17 of the server 13.

In a step S1, the industrial process component depicted in the current thermal image I-2 is identified. The identification of the industrial process component in the current thermal image I-2 may be carried out similarly as in the case when an industrial process component in a reference thermal image is identified.

When the industrial process component in the current thermal image I-2 has been identified, a reference thermal image I-1 depicting the industrial process component identified in the current thermal image I-2 is in a step S2 identified from a plurality of reference thermal images, each depicting a respective industrial process component, stored in the memory 7 of the mobile device 3 or the memory 17 of the server 3, depending on the implementation of the method.

In a step S3, the reference thermal image I-2 of the industrial process component is obtained. In a typical embodiment, the reference thermal image I-2 is obtained from the memory 17 of the server 13, although it is envisaged that the reference thermal images may according to one variation of the inventive concept be stored in the memory of the mobile device. In this latter case the entire method may be carried out by the mobile device.

In a step S4, the reference thermal image I-2 is compared with the current thermal image I-1. Depending on the implementation of the method, step S4 of comparing may be carried out either by the processor 15 of the server 13, or alternatively by the processor 5 of the mobile device 3. The comparison may include scaling and aligning of the current thermal image I-2 and the reference thermal image I-1 wherein pixel-wise comparison of the reference thermal image I-1 and the current thermal image I-2 is performed. Any other suitable image comparison method is also contemplated as an alternative to the pixel-wise comparison.

In a step S5, it is determined that the industrial process component emits an abnormal amount of heat if a difference between the reference thermal image and the current thermal image is detected in step S4 of comparing the reference thermal image with the current thermal image. For example, in the current thermal image I-2 it can be seen that the connection between cable 21-3 and connector 23-3 differs from the same connection between cable 21-3 and connector 23-3 in the reference thermal image I-1. To this end, in this example it can be concluded that there is a bad connection or a similar problem at the connection between the cable 21-3 and the connector 23-3.

According to one embodiment, it may be determined in step S5 that the industrial process component emits an abnormal amount of heat if for example the number of pixels differing in intensity in step S4 of comparing exceeds a predetermined threshold.

According to one embodiment, if a difference is determined in step S5 between the reference thermal image I-1 and the current thermal image I-2_{,} in a step S6 a visual indication is provided in the current thermal image I-2 that the industrial process component emits an abnormal amount of heat. The visual indication is advantageously provided in an area of the industrial process component exhibiting the abnormal heat emission, as indicated by the area E in Fig. 3b. Alternatively, the visual identification could also be provided in the reference thermal image. In either case, visual identification may for example be a highlighting of the region or area in the current thermal image which emits the abnormal amount of heat, a line may enclose the area, or an arrow may point to the affected area.

Depending on where the method is carried out, i.e. in the server or the mobile device, software or a computer program able to carry out the method is stored in the memory of that device, which software can be loaded into the processor of the device to carry out the method.

It is envisaged that the present inventive concept may be utilised to detect both electrical and mechanical heat-emissive abnormalities. In addition to the detection of electrically generated abnormal heat emission from industrial process components, the method and mobile device presented herein allows for preventive maintenance of mechanical structures as the thermal image analysis for example will be able to reveal motors with bad bearings generating abnormal amounts of heat. Advantageously, change of spare parts can then be done prior to a breakdown.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of detecting abnormal heat emission of an industrial process component in an industrial process, wherein the method comprises:
obtaining (So) a current thermal image (I-2) of the industrial process component,
obtaining (S3) a reference thermal image (I-1) of the industrial process component, the reference thermal image (I-1) depicting the industrial process component in a normal condition,
comparing (S4) the current thermal image (I-2) with the reference thermal image (I-1), and
determining (S5) that the industrial process component emits an abnormal amount of heat if a difference between the reference thermal image (I-1) and the current thermal image (I-2) is detected in the step of comparing (S4) the current thermal image (I-2) with the reference thermal image (I-1).

2. The method as claimed in claim 1, comprising, if a difference is determined between the reference thermal image (I-1) and the current thermal image (I-2), providing (S6) a visual indication in the current thermal image (I-2) that the industrial process component emits an abnormal amount of heat.

3. The method as claimed in claim 2, wherein the visual indication is provided in an area of the industrial process component emitting the abnormal amount of heat.

4. The method as claimed in any of the preceding claims, comprising identifying (S1) the industrial process component depicted in the current thermal image (I-2), and identifying (S2) the reference thermal image (I-1) of the industrial process component from a plurality of reference thermal images, each depicting a respective industrial process component, based on the identity of the industrial process component depicted in the current thermal image (I-2).

5. A computer program comprising computer-executable components for causing a device to perform the steps recited in any one of claims 1-4 when the computer-executable components are run on a processor included in the device.

6. A computer program product comprising a computer readable medium, the computer readable medium having the computer program according to claim 5 embodied therein.

7. A device (3; 13) for detecting abnormal heat emission of an industrial process component in an industrial process, wherein the device comprises:
a processor (5; 15) arranged to:
obtain a current thermal image (I-2) of the industrial process component,
obtain a reference thermal image (I-1) of the industrial process component, the reference thermal image (I-1) depicting the industrial process component in a normal condition,
compare the current thermal image (I-2) with the reference thermal image (I-1), and
determine that the industrial process component emits an abnormal amount of heat if a difference between the reference thermal image (I-1) and the current thermal image (I-2) is detected when the current thermal image is compared with the reference thermal image.

8. The device (3; 13) as claimed in claim 7, wherein the processor (5; 15) is arranged to provide a visual indication in the current thermal image that the industrial process component emits an abnormal amount of heat if a difference is determined between the reference thermal image and the current thermal image.

9. The device (3; 13) as claimed in claim 9, wherein the visual indication is provided in an area of the industrial process component emitting the abnormal amount of heat.

10. The device (3; 13) as claimed in any of claims 7-9, wherein the processor (5; 15) is arranged to identify the industrial process component depicted in the current thermal image, and to identify the reference thermal image of the industrial process component from a plurality of reference thermal images, each depicting a respective industrial process component, based on the identity of the industrial process component depicted in the current thermal image.

11. The device (13) as claimed in any of claims 7-10, wherein the device is a server.

12. The device (13) as claimed in claim 11, comprising a memory arranged to store the reference thermal image, and wherein the processor is arranged to communicate with a mobile device for obtaining the current thermal image.

13. The device (3) as claimed in any of claims 7-10, wherein the device is a mobile device.

14. The device (3) as claimed in claim 13, comprising a thermographic camera (11) arranged to capture the reference thermal image and the current thermal image.
